# EUROPÄISCHE PATENTSCHRIFT

(11) **EP 3 955 376 B1**
(45) Veröffentlichungstag und Bekanntmachung des Hinweises auf die Patenterteilung: **01.01.2025**
(21) Anmeldenummer: 20190652.6
(22) Anmeldetag: 12.08.2020
(51) Int. Cl.: H01P 5/08, H01Q 1/22, H01Q 5/55, H01Q 13/06

(54) **HOHLLEITEREINKOPPLUNGSVORRICHTUNG FÜR EINEN RADARSENSOR**
WAVEGUIDE COUPLING DEVICE FOR A RADAR SENSOR
DISPOSITIF D'ACCOUPLEMENT D'UN GUIDE D'ONDES POUR UN CAPTEUR RADAR

(43) Veröffentlichungstag der Anmeldung: 16.02.2022
(73) Patentinhaber: VEGA Grieshaber KG, 77709 Wolfach (DE)
(72) Erfinder: BAUR, Roland, 78126 Königsfeld (DE)
(74) Vertreter: Maiwald GmbH

(56) Entgegenhaltungen:
- CN-A- 110 739 513
- DE-A1- 2 162 196
- US-A1- 2016 204 495
- TENG LI ET AL: "A wideband right-angle transition between thin substrate integrated waveguide and rectangular waveguide based on multi-section structure", INTERNATIONAL JOURNAL OF MICROWAVE AND WIRELESS TECHNOLOGIES, vol. 8, no. 2, 27 February 2015 (2015-02-27), GB, pages 185 - 191, XP055767368, ISSN: 1759-0787, DOI: 10.1017/S1759078715000185
- AHMAD WAEL ABDULLAH ET AL: "Millimeter-Wave Single-Layer Full-Band WR12 Vertical Waveguide Transition", 2020 IEEE RADIO AND WIRELESS SYMPOSIUM (RWS), IEEE, 26 January 2020 (2020-01-26), pages 298 - 301, XP033751564, DOI: 10.1109/RWS45077.2020.9050127

## Beschreibung

### Gebiet der Erfindung

Die Erfindung betrifft allgemein das Gebiet der Radartechnik und/oder Radarmesstechnik. Insbesondere betrifft die Erfindung eine Hohlleitereinkopplungsvorrichtung für einen Radarsensor, einen Radarsensor mit einer solchen Hohlleitereinkopplungsvorrichtung, ein Füllstandmessgerät mit einer solchen Hohlleitereinkopplungsvorrichtung, die Verwendung einer derartigen Hohlleitereinkopplungsvorrichtung sowie ein Verfahren zum Erzeugen eines Radarsignals mit einer solchen Hohlleitereinkopplungsvorrichtung.

### Hintergrund

Radarmessgeräte bzw. Radarsensoren können unter anderem in der Automatisierungstechnik im industriellen Umfeld eingesetzt werden. Beispielsweise können sie in Form von Radarfüllstandmessgeräten zur Bestimmung eines Füllstandes eines Mediums ausgeführt sein. Häufig verfügen derartige Radarfüllstandmessgeräte (nachfolgend auch Füllstandmessgeräte genannt) über eine Antenne, etwa eine Hornantenne, welche über einen Hohlleiter mit einem Radarsignal gespeist werden kann und über welche das Radarsignal abgestrahlt sowie ein an einer Oberfläche reflektierter Teil des Radarsignals empfangen werden kann.

Ein Radarsignal bzw. eine dem Radarsignal zugrundeliegende elektromagnetische Welle, etwa eine Mikrowelle, kann dabei von einem Radarmodul mit einer Radarsignalquelle erzeugt und beispielsweise über einen substratintegrierten Wellenleiter in den Hohlleiter eingekoppelt werden, von dem aus das Radarsignal abgestrahlt werden kann. Eine Einspeisung von dem substratintegrierten Wellenleiter in den Hohlleiter kann beispielsweise über eine Patchantenne mit einem Resonanztopf oder über ein Lambda/4-Plättchen mit Resonanztopf erfolgen. Derartige Hohlleitereinkopplungen (bzw. Hohlleitereinkopplungsvorrichtungen) können jedoch kostenintensiv in der Herstellung sein, beispielsweise da der Resonanztopf regelmäßig in einer Leiterplatte eingearbeitet ist.

US 2016/024495 A1 offenbart eine Verbindervorrichtung, welche offenbart: ein Wellenleiterkabel; ein Substrat mit einer Wellenleiterstruktur; und einen Kopplungsabschnitt, der dazu konfiguriert ist, einen Endabschnitt des Wellenleiterkabels elektromagnetisch mit der Wellenleiterstruktur zu koppeln. Darüber hinaus ist ein Kommunikationssystem offenbart, welches umfasst: einen Sender, der dazu konfiguriert ist, Hochfrequenzsignale zu übertragen; einen Empfänger, der zum Empfangen von Hochfrequenzsignalen konfiguriert ist; ein Wellenleiterkabel, das zum Übertragen von Hochfrequenzsignalen zwischen dem Sender und dem Empfänger konfiguriert ist; und eine Verbindervorrichtung, die so konfiguriert ist, dass sie den Sender und/oder den Empfänger mit dem Wellenleiterkabel verbindet.

CN 110 739 513 A offenbart einen Ka-Frequenzband-Wellenleiter-Koaxialwandler. Der Ka-Frequenzband-Wellenleiter-Koaxialwandler umfasst eine Wellenleiterbasis, eine obere Wellenleiterabdeckung und einen Verbinder vom K-Typ. Die obere Wellenleiterabdeckung wird auf der oberen Fläche der Wellenleiterbasis durch standardmäßige M1,6-Innensechskantschrauben befestigt. Der K-Typ-Verbinder wird auf der Oberseite der oberen Wellenleiterabdeckung durch standardmäßige M2,5-Schrauben befestigt und fixiert. Die obere Oberfläche der Wellenleiterbasis und die untere Oberfläche der oberen Wellenleiterabdeckung sind jeweils mit einer abgestuften Übergangsstruktur versehen. Die beiden gestuften Übergangsstrukturen sind nicht vollständig gleich und nachdem die Wellenleiterbasis und die obere Wellenleiterabdeckung zusammengebaut sind, wird eine asymmetrische Doppelsteg-Wellenleiter-zu-Rechteck-Wellenleiter-Übergangsstruktur in einem Wellenleiter gebildet.

DE 21 62 196 A1 offenbart einen Wellentypwandlerzur Kopplung von Hohlleitern mit unsymmetrischen Bandleitungen. Der Wellentypwandler besteht aus einem auf die eine Seite eines Streifens aus dielektrischem Material aufgebrachten schmalen, streifenförmigen Leiter und einem auf dessen andere Seite aufgebrachten großflächigen Masseleiter, bei dem die Bandleitung in den Innenraum eines Hohlleiterabschnittes hineinragt und ihr Masseleiter mit einer Wand des Hohlleiters leitend verbunden ist. Der Wellentypwandler ist dadurch gekennzeichnet, dass die achsparallel in den Hohlleiter hineinragende Bandleitung derart ausgerichtet ist, dass die beschichteten Flächen des dielektrischen Streifens parallel zum elektrischen Feld im Hohlleiterabschnitt verlaufen und dass das Bandleitungsende als eine Schlitzleitung ausgeführt ist, bei der der Masseleiter mit dem Schlitz versehen ist und der Schlitz oder/und der streifenförmige Leiter derart gekrümmt ist bzw. sind, dass sich Schlitz und streifenförmiger Leiter unter einem annähernd rechten Winkel überlappen.

Teng Li et al., "A wideband right-angle transition between thin substrate integrated waveguide and rectangularwaveguide based on multi-section structure", Int. Journal of microwave and wireless technologies, ISSN: 1759-0787, offenbart einen Breitband rechtwinkligen Übergang zwischen einem in einem dünnen Substrat integrierten Wellenleiter und einem rechteckigen Wellenleiter, basierend auf einer Struktur mit mehreren Abschnitten.

Ahmad Wael Abdullah et al. "Millimeter-Wave Single-Layer Full-Band WR12 Vertical Waveguide Transition", IEEE Radio and wireless symposium, DOI: 10.1109/RWS45077.2020.9050127 offenbart einen Millimeterwellen-Einschicht-Vollband-WR1 2-Vertikal-Wellenleiter-Übergang.

### Zusammenfassung

Mit Ausführungsformen der vorliegenden Erfindung können in vorteilhafter Weise eine verbesserte Hohlleitereinkopplungsvorrichtung für einen Radarsensor sowie ein entsprechender Radarsensor und ein entsprechendes Füllstandmessgerät bereitgestellt werden.

Dies wird insbesondere durch den Gegenstand des unabhängigen Patentanspruchs ermöglicht. Weiterbildungen der Erfindung ergeben sich aus den Unteransprüchen und der nachfolgenden Beschreibung.

Die nachfolgende Beschreibung betrifft gleichermaßen die Hohlleitereinkopplungsvorrichtung, den Radarsensor, die Verwendung der Hohlleitereinkopplungsvorrichtung und/oder des Radarsensors, das Verfahren zum Erzeugen eines Radarsignals mit der Hohlleitereinkopplungsvorrichtung sowie das Füllstandmessgerät mit dem Radarsensor und/oder der Hohlleitereinkopplungsvorrichtung. Mit anderen Worten gelten Merkmale, Elemente und/oder Funktionen, welche nachfolgend mit Bezug auf die Hohlleitereinkopplungsvorrichtung beschrieben sind, gleichermaßen für den Radarsensor, die Verwendung der Hohlleitereinkopplungsvorrichtung, das Verfahren zum Erzeugen eines Radarsignals mit der Hohlleitereinkopplungsvorrichtung sowie das Füllstandmessgerät, und umgekehrt.

Ein erster Aspekt der vorliegenden Offenbarung betrifft eine Hohlleitereinkopplungsvorrichtung für einen Radarsensor. Die Hohlleitereinkopplungsvorrichtung weist einen Hohlleiter zum Abstrahlen und/oder Emittieren eines Radarsignals und ein Hochfrequenzsubstrat auf. Das Hochfrequenzsubstrat weist an einem ersten Ende wenigstens einen Eingangsleiter zur Einspeisung wenigstens einer Erregerwelle in das Hochfrequenzsubstrat, an einem dem ersten Ende gegenüberliegenden zweiten Ende einen Abstrahlbereich zur Auskopplung der Erregerwelle aus dem Hochfrequenzsubstrat, und einen mit dem Eingangsleiter und dem Abstrahlbereich gekoppelten Wellenleiter auf. Ein Ende des Hohlleiters, welches nachfolgend als Erregerende des Hohlleiters bezeichnet ist, ist derart an, angrenzend an und/oder auf dem Abstrahlbereich des Hochfrequenzsubstrats angeordnet, dass die Erregerwelle über den Abstrahlbereich des Hochfrequenzsubstrats in das Erregerende des Hohlleiters einkoppelbar ist, einkoppeln kann und/oder eintauchen kann. Der Hohlleiter weist ferner wenigstens ein erstes Erregerelement und ein zweites Erregerelement auf, welche jeweils an dem Erregerende in einem Innenvolumen des Hohlleiters angeordnet sind. Das erste Erregerelement weist eine erste in Längserstreckungsrichtung des Hohlleiters bemessene Länge und das zweite Erregerelement eine zweite in Längserstreckungsrichtung des Hohlleiters bemessene Länge auf, welche sich von der ersten Länge des ersten Erregerelements unterscheidet, so dass über, basierend auf und/oder durch die Erregerwelle an dem ersten Erregerelement und dem zweiten Erregerelement wenigstens eine erste Resonanzwelle mit einer ersten Resonanzfrequenz und eine zweite Resonanzwelle mit einer zweiten Resonanzfrequenz anregbar sind, welche in dem Hohlleiter unter Bildung des Radarsignals zumindest teilweise überlagerbar sind, überlagert werden können, sich überlagern können, interferrierbar sind, interferriert werden können und/oder interferrerieren können.

Bei der Erregerwelle kann es sich im Allgemeinen um eine elektromagnetische Welle handeln, wie zum Beispiel eine Mikrowelle, welche beispielsweise von einem Radarmodul bereitgestellt werden kann. Das Hochfrequenzsubstrat kann dazu eingerichtet sein, die Erregerwelle entlang einer Laufrichtung der Erregerwelle fortzuleiten und/oder zu führen sowie zumindest teilweise in den Hohlleiter einzukoppeln und gegebenenfalls im Empfangsfall das Empfangssignal aus dem Hohlleiter in das Substrat einzukoppeln. Das erste Ende des Hochfrequenzsubstrats kann sich in Laufrichtung der Erregerwelle gegenüberliegend dem zweiten Ende und/oder stromaufwärts des zweiten Endes des Hochfrequenzsubstrats befinden. Das Hochfrequenzsubstrat kann beispielsweise in Form einer Platine, einem "Printed Circuit Board (PCB) und/oder einer Leiterplatte ausgeführt sein.

Beim Eingangsleiter, welcher sich am ersten Ende des Hochfrequenzsubstrats befindet, kann es sich um eine Leitung, eine Mikrostreifenleitung und/oder eine Strip Line handeln. Über den Eingangsleiter kann die Erregerwelle beispielsweise von einer Quelle, beispielsweise einer Mikrowellenquelle, einem Radarmodul, einer Radarsignalquelle oder dergleichen, in das Hochfrequenzsubstrat eingespeist und über den Wellenleiter, oder alternativ über eie Stripline, Coplanarline, Mikrostrip oder ähnlichem, in Richtung Abstrahlbereich geleitet werden.

Beim Wellenleiter kann es sich zum Beispiel um einen substratintegrierten Wellenleiter (SIW) handeln. Der Wellenleiter kann als gefüllter Hohlleiter angesehen werden.

Beispielsweise kann dieser eine flächige Oberseite und eine flächige Unterseite aufweisen, etwa in Form von Kupferlayern und/oder leitenden Schichten, zwischen denen sich Substratmaterial befindet und welche mittels Durchkontaktierungen bzw. Vias, welche die "Seitenwände" des "Hohlleiters" ausbilden, elektrisch leitend miteinander verbunden sein können. Alternativ kann jedoch jede andere Art von Wellenleiter verwendet werden.

Beim Abstrahlbereich kann es sich um einen Abschnitt des Hochfrequenzsubstrats handeln, über welchen zumindest ein Teil der Erregerwelle in das Erregerende des Hohlleiters eingekoppelt werden kann.

Es sei bemerkt, dass analog zum Senden und/oder Abstrahlen des Radarsignals auch ein an einer Oberfläche reflektiertes Radarsignal mit der Hohlleitereinkopplungsvorrichtung empfangen werden kann. Sämtliche voranstehende und nachfolgende Offenbarung bezüglich des Abstrahlens bzw. Sendens des Radarsignals gilt daher analog für das Empfangen eines Radarsignals mit der Hohlleitereinkopplungsvorrichtung.

Der Hohlleiter kann grundsätzlich eine beliebige Geometrie und/oder Querschnittsgeometrie aufweisen. Beispielsweise kann der Hohlleiter als Rundhohlleiter, elliptischer Hohlleiter, ovaler Hohlleiter oder als Rechteckshohlleiter ausgeführt sein. Das Erregerende des Hohlleiters kann ein dem Abstrahlbereich des Hochfrequenzsubstrates zugewandtes Ende des Hohlleiters bezeichnen, welches einem Abstrahlende des Hohlleiters in Abstrahlrichtung des Radarsignals und/oder in Längserstreckungsrichtung des Hohlleiters gegenüberliegen kann. Die Längserstreckungsrichtung des Hohlleiters kann im Wesentlichen parallel zu einer Abstrahlrichtung und/oder einer Fortleitungsrichtung (bzw. Laufrichtung) des Radarsignals im Inneren des Hohlleiters verlaufen. Über den Hohlleiter kann das Radarsignal beispielsweise in eine Antenne, etwa eines Radarsensors und/oder eines Füllstandmessgeräts, eingekoppelt und abgestrahlt werden. Der Hohlleiter kann zum Beispiel aus Metall und/oder einem elektrisch leitfähigen Material gefertigt sein.

Im Kontext der vorliegenden Offenbarung kann ein "Erregerelement" eine geometrische Struktur bezeichnen, die derart ausgebildet ist, dass in dem Innenvolumen des Hohlleiters eine oder mehrere Resonanzwellen gebildet und/oder generiert werden. Eine Resonanzwelle kann dabei von einem, an einem und/oder in einem der Erregerelemente generiert werden. Alternativ oder zusätzlich kann eine Resonanzwelle zwischen zwei Erregerelementen und/oder zwischen einem der Erregerelemente und einer weiteren Struktur des Hohlleiters generiert werden. Jede Resonanzwelle kann dabei eine elektromagnetische Welle bezeichnen, welche durch eines oder mehrere (bzw. basierend auf einem oder mehreren) Erregerelementen generiert wurde und welche eine definierte Resonanzfrequenz aufweist. Die Resonanzfrequenzen unterschiedlicher Resonanzwellen können sich dabei voneinander unterscheiden.

Die Längen der Erregerelemente können im Allgemeinen eine Abmessung des jeweiligen Erregerelements bezeichnen, welche parallel zur Längserstreckungsrichtung des Hohlleiters und/oder parallel zur Abstrahlrichtung des Radarsignals bemessen sein können. Die Länge jeden Erregerelements kann beispielsweise von einer Unterkante des jeweiligen Erregerelements zu einer der Unterkante in Längserstreckungsrichtung des Hohlleiters gegenüberliegenden Oberkante des jeweiligen Erregerelements bemessen sein. Die Unterkanten mehrerer Erregerelemente können dabei in unterschiedlichen oder identischen Abständen zu einer Stirnfläche des Hohlleiters am Erregerende angeordnet sein. Insbesondere kann vorgesehen sein, dass die Unterkanten zumindest eines Teils der Erregerelemente bündig mit der Stirnfläche des Hohlleiters am Erregerende abschließen. Denkbar ist jedoch auch, dass zumindest ein Teil der Erregerelemente relativ zueinander in Längserstreckungsrichtung versetzt sind.

Die Längen der Erregerelemente können dabei derart gewählt sein, dass die Oberkanten verschiedener Erregerelemente im Vergleich zueinander unterschiedlich weit von der Stirnfläche des Hohlleiters am Erregerende beabstandet sind. Insbesondere die Längen der Erregerelemente können derart gewählt und aufeinander abgestimmt sein, dass zumindest zwei Resonanzwellen mit zwei voneinander unterschiedlichen Resonanzfrequenzen in dem Hohlleiter erzeugt bzw. angeregt werden können. Insbesondere können die erste Länge des ersten Erregerelements und die zweite Länge des zweiten Erregerelements im Verhältnis zueinander derart gewählt und/oder aufeinander abgestimmt sein, dass die erste Resonanzwelle mit der ersten Resonanzfrequenz und die zweite Resonanzwelle mit der zweiten Resonanzfrequenz generiert werden können. Die erste und zweite Resonanzwelle können beispielsweise in dem Hohlleiter interferieren und zumindest teilweise das Radarsignal ausbilden.

Grundsätzlich kann jedes der Erregerelemente eine beliebige Geometrie, Form, Größe, Querschnittsgeometrie oder dergleichen aufweisen. Beispielsweise kann eines oder mehrere der Erregerelemente zumindest in einem Teilbereich plattenförmig, stiftförmig, finnenartig, und/oder quaderförmig ausgebildet sein. Auch andere Geometrien sind jedoch denkbar. Ferner können verschiedene Erregerelemente ähnliche oder identische Geometrien und/oder Querschnittsgeometrien aufweisen. Alternativ können verschiedene Erregerelemente im Vergleich zueinander unterschiedliche Geometrien und/oder Querschnittsgeometrien aufweisen.

Die erfindungsgemäße Hohlleitereinkopplungsvorrichtung kann in vorteilhafter Weise eine breitbandige Einspeisung einer Erregerwelle in den Hohlleiter und/oder die Erzeugung eines breitbandigen Radarsignals ermöglichen. Ferner kann für die Einspeisung der Erregerwelle in den Hohlleiter auf einen Resonanztopf verzichtet werden, welcher vielfach bei Hohlleitereinkopplungen verwendet wird und häufig in ein Leiterplattensubstrat eingearbeitet ist. Zum einen können dadurch Herstellungskosten und zum anderen Bauraum reduziert werden. Insbesondere wirken sich die Toleranzen bei der Herstellung des Resonanztopfs nicht mehr oder zumindest geringer auf das Radarsignal aus.

Gemäß einer Ausführungsform ragen das erste Erregerelement und das zweite Erregerelement der Hohlleitereinkopplungsvorrichtung jeweils zumindest teilweise von einer Wandung und/oder Innenfläche des Hohlleiters in das Innenvolumen des Hohlleiters hinein. Mit anderen Worten können die Erregerelemente anliegend an der und/oder angrenzend an die Wandung des Hohlleiters angeordnet sein. Das erste und das zweite Erregerelement können beispielsweise in Berührkontakt mit der Wandung und/oder Innenfläche des Hohlleiters stehen.

Gemäß einer Ausführungsform ragen das erste Erregerelement und das zweite Erregerelement an zwei sich gegenüberliegenden Seiten und/oder an zwei unterschiedlichen Seiten des Hohlleiters des Hohlleiters von der Wandung und/oder Innenfläche des Hohlleiters ab, beispielsweise in Richtung eines Zentrums des Hohlleiters. Beispielsweise können das erste und zweite Erregerelement, sowie optional eines oder mehrere weitere Erregerelemente, entlang eines Innenumfangs des Hohlleiters an unterschiedlichen Positionen, Bereichen und/oder Seiten des Hohlleiters von der Wandung und/oder Innenfläche des Hohlleiters abragen.

Gemäß einer Ausführungsform sind zumindest die erste Länge des ersten Erregerelements und die zweite Länge des zweiten Erregerelements derart aufeinander abgestimmt, dass die zweite Resonanzwelle derart zeitverzögert zur ersten Resonanzwelle generierbar ist, dass die erste Resonanzwelle und die zweite Resonanzwelle überlagerbar sind, etwa zumindest teilweise phasenrichtig und/oder konstruktiv interferierbar sind. Die Erregerwelle kann beispielsweise aus dem Abstrahlbereich in den Hohlleiter eintauchen, wobei zunächst durch zumindest eines oder beide Erregerelemente die erste Resonanzwelle generiert werden kann. Bei Fortschreiten der Erregerwelle und/oder der ersten Resonanzwelle im Hohlleiter kann ferner zeitverzögert die zweite Resonanzwelle, durch zumindest eines oder beide Erregerelemente generiert werden, welche mit der im Hohlleiter fortschreitenden ersten Resonanzwelle interferieren kann bzw. sich aufaddieren kann. Dies kann die Bereitstellung eines breitbandigen Radarsignals ermöglichen.

Gemäß einer Ausführungsform entsteht die erste Resonanzwelle an dem zweiten Erregerelement und/oder durch das zweite Erregerelement. Alternativ oder zusätzlich entsteht die zweite Resonanzwelle zwischen dem erstem und dem zweiten Erregerelement. Die zweite Resonanzwelle kann beispielsweise zwischen den Oberkanten des ersten und zweiten Erregerelements gebildet werden.

Gemäß einer Ausführungsform ist der Hohlleiter der Hohlleitereinkopplungsvorrichtung einstückig mit dem ersten und mit dem zweiten Erregerelement ausgebildet. Der Hohlleiter kann samt Erregerelementen beispielsweise in einem Gussverfahren und/oder Druckgussverfahren, oder 3D-Druck in Metall oder in Kunststoff mit anschließender Metallisierung, hergestellt werden. Dies kann insbesondere eine mechanische Stabilität des Hohlleiters erhöhen sowie eine präzise Ausbildung der Erregerelemente ermöglichen. Alternativ kann jedoch zumindest ein Teil der Erregerelemente an den Hohlleiter geschweißt werden, geklebt werden oder anderweitig mit dem Hohlleiter verbunden werden.

Gemäß einer Ausführungsform weist die Hohlleitereinkopplungsvorrichtung ferner ein drittes Erregerelement auf, welches an dem Erregerende in dem Innenvolumen des Hohlleiters angeordnet ist. Das dritte Erregerelement weist eine dritte in Längserstreckungsrichtung des Hohlleiters bemessene Länge auf, welche sich von der ersten Länge des ersten Erregerelements und der zweiten Länge des zweiten Erregerelements unterscheidet. Die dritte Länge ist derart bemessen, dass über die Erregerwelle zwischen dem ersten Erregerelement und dem dritten Erregerelement eine dritte Resonanzwelle mit einer dritten Resonanzfrequenz anregbar ist, welche sich von der ersten und der zweiten Resonanzfrequenz unterscheidet. Optional können auch eines oder mehrere weitere Erregerelemente vorgesehen sein. Sämtliche voranstehende und nachfolgende Offenbarung zu einem der Erregerelemente gilt gleichermaßen für jedes andere Erregerelement, sofern nicht explizit anders beschrieben. Durch die dritte Resonanzwelle kann in vorteilhafter Weise die Breitbandigkeit weiter gesteigert werden.

Gemäß einer Ausführungsform sind die erste Resonanzwelle, die zweite Resonanzwelle und die dritte Resonanzwelle zum Radarsignal überlagerbar. Mit anderen Worten können die drei Resonanzwelle interferieren, insbesondere zumindest teilweise phasenrichtig interferieren. Wie voranstehend bezüglich des ersten und zweiten Erregerelements sowie der ersten und zweiten Resonanzwelle erläutert, kann die dritte Länge des dritten Erregerelements derart gewählt und/oder mit der ersten und zweiten Länge abgestimmt sein, dass die dritte Resonanzwelle zeitverzögert zur ersten und zweiten Resonanzwelle generiert wird und sich im Inneren des Hohlleiters bei Fortschreiten der Welle(n) auf diese addieren kann. Derart kann ein breitbandiges Radarsignal basierend auf der ersten, zweiten und dritten Resonanzwelle erzeugt werden, welches unter anderem die erste, zweite und dritte Resonanzfrequenz enthalten kann. Signale gleicher Frequenz können sich bei Überlagerung verstärken, wohingegen Signale unterschiedlicher Frequenzen bei deren Überlagerung einen gewissen Frequenzversatz und somit eine gewisse Breitbandigkeit des Radarsignals herbeiführen können.

Gemäß einer Ausführungsform ist das dritte Erregerelement als Wandungsvorsprung ausgebildet. Das dritte Erregerelement kann auch als Wandung oder als Kante des Wandungsvorsprungs bezeichnet werden. Dies kann insbesondere eine kompakte Bauform des Hohlleiters ermöglichen und eine mechanische Stabilität erhöhen.

Gemäß einer Ausführungsform ragt das zweite Erregerelement von dem durch das dritte Erregerelement ausgebildeten Wandungsvorsprung in das Innenvolumen ab. Denkbar ist in diesem Fall, dass das zweite und das dritte Erregerelement einstückig ausgebildet sein können.

Gemäß einer Ausführungsform ist die erste Länge größer als die zweite Länge und die dritte Länge ist größer als die erste Länge. Auch andere relative Längenverhältnisse der Längen der Erregerelemente sind denkbar und können Einsatz finden. Beispielsweise können die Längen und/oder Längenverhältnisse je nach gewünschtem Frequenzband des Radarsignals und/oder je nach gewünschten Resonanzfrequenzen gewählt sein.

Optional können auch weitere Parameter, wie beispielsweise die Geometrien, Formen, Größen, Ausrichtung zueinander und/oder die relative Anordnung der Erregerelemente zueinander je nach gewünschtem Frequenzband gewählt und/oder aufeinander abgestimmt werden.

Gemäß einer Ausführungsform weist das Hochfrequenzsubstrat zumindest in einem Teilbereich einen rechteckigen Querschnitt auf. Dies kann eine kompakte Bauform des substratintegrierten Wellenleiters sowie eine effiziente Leitung der Erregerwelle(n) ermöglichen.

Gemäß einer Ausführungsform ist der Hohlleiter der Hohlleitereinkopplungsvorrichtung ein Rundhohlleiter. Der Hohlleiter kann somit einen runden Querschnitt und/oder eine runde Querschnittsgeometrie aufweisen. Andere Geometrien sind jedoch denkbar.

Beispielsweise kann der substratintegrierte Wellenleiter einen rechteckigen Querschnitt aufweisen und der Hohlleiter kann als Rundhohlleiter ausgeführt sein. Die erfindungsgemäße Ausgestaltung der Hohlleitereinkopplungsvorrichtung mit Abstrahlbereich und den wenigstens zwei Erregerelementen ermöglicht in vorteilhafter Weise einen Übergang für die Erregerwelle von einem solchen rechteckigen substratintegrierten Hohlleiter in den Rundhohlleiter zu schaffen, ohne dass ein weiteres Modul zur Wandlung von Rechteck- auf Rundhohlleiter notwendig wäre.

Gemäß einer Ausführungsform weist das Hochfrequenzsubstrat einen oberen Kupferlayer und einen unteren Kupferlayer auf, welche zumindest teilweise mit Durchkontaktierungen verbunden sind. Der obere Kupferlayer und der untere Kupferlayer können auch als Oberseite und Unterseite bezeichnet werden. Zwischen den zwei Kupferlayer kann der substratintegrierte Wellenleiter ausgebildet sein. Die Durchkontaktierungen können die zwei Kupferlayer elektrisch leitend miteinander verbinden. Die Durchkontaktierungen können gleichsam eine Begrenzung des substratintegrierten Wellenleiters bilden und/oder definieren.

Gemäß einer Ausführungsform ist der Abstrahlbereich des Hochfrequenzsubstrats mit Durchkontaktierungen begrenzt. Die Durchkontaktierungen, die den Abstrahlbereich begrenzen, können als "Seitenwände" des Abstrahlbereichs angesehen werden und werden häufig auch Vias genannt.

Ein weiterer Aspekt der vorliegenden Offenbarung betrifft einen Radarsensor mit einer Hohlleitereinkopplungsvorrichtung, so wie voranstehend und nachfolgend beschrieben. Der Radarsensor kann von jeglicher Art sein. Es kann sich um einen Füllstandradarsensor, einen Abstandssensor, einen Grenzstandsensor, einen Bewegungsradarsensor, einen Wetterradarsensor oder einen Bodenradarsensor handeln. Der Radarsensor kann beispielsweise eine oder mehrere Antennen, etwa eine Hornantenne, aufweisen. Beim Radarsensor kann es sich im Allgemeinen ferner um ein Feldgerät zur Erfassung einer oder mehrerer Messgrößen handeln.

Mitunter kann vorgesehen sein, dass Radarsensoren ein Sendesignal bzw. Radarsignal erzeugen, welches einen gewissen Frequenzbereich abdeckt. In der Füllstandmesstechnik kann die Sendefrequenz während eines Messzyklus beispielsweise über einen gewissen Frequenzbereich angehoben werden, was auch als Frequency Modulated Continuous Wave Radar bezeichnet wird. Durch Bereitstellung eines breitbandigen Radarsignals über die Hohlleitereinkopplungsvorrichtung kann ein solcher Frequenzhub umgesetzt bzw. ermöglicht werden.

Ein weiterer Aspekt der vorliegenden Offenbarung betrifft ein Füllstandmessgerät mit einem Radarsensor und/oder einer Hohlleitereinkopplungsvorrichtung, so wie voranstehend und nachfolgend beschrieben. Das Füllstandmessgerät kann zur Erfassung eines Füllstandes eines Mediums, etwa eines Mediums in einem Behälter, ausgeführt sein.

Ein weiterer Aspekt der vorliegenden Offenbarung betrifft die Verwendung einer Hohlleitereinkopplungsvorrichtung in einem Radarsensor und/oder einem Füllstandmessgerät, so wie voranstehend und nachfolgend beschrieben.

Ein weiterer Aspekt der vorliegenden Offenbarung betrifft ein Verfahren zum Erzeugen und/oder Empfangen eines Radarsignals mit einer Hohlleitereinkopplungsvorrichtung, so wie voranstehend und nachfolgend beschrieben. Das Verfahren weist die folgenden Schritte auf:
- Einspeisen wenigstens einer Erregerwelle in ein Hochfrequenzsubstrat einer Hohlleitereinkopplungsvorrichtung;
- Einkoppeln der Erregerwelle über einen Abstrahlbereich des Hochfrequenzsubstrats der Hohlleitereinkopplungsvorrichtung in ein Erregerende eines Hohlleiters der Hohlleitereinkopplungsvorrichtung;
- Anregen, über die Erregerwelle an und/oder basierend auf wenigstens einem ersten Erregerelement und einem zweiten Erregerelement des Hohlleiters, wenigstens einer ersten Resonanzwelle mit einer ersten Resonanzfrequenz und einer zweiten Resonanzwelle mit einer zweiten Resonanzfrequenz; und
- Abstrahlen des Radarsignals mit dem Hohlleiter der Hohlleitereinkopplungsvorrichtung basierend auf einer Überlagerung wenigstens der ersten Resonanzwelle und der zweiten Resonanzwelle; und/oder
Empfangen eines reflektierten Radarsignals mit dem Hohlleiter der Hohlleitereinkopplungsvorrichtung.

Im Folgenden werden mit Verweis auf die Figuren beispielhafte Ausführungsformen beschrieben. Die Darstellungen in den Figuren sind schematisch und nicht maßstabsgetreu. Werden in der folgenden Figurenbeschreibung die gleichen oder ähnliche Bezugszeichen verwendet, so bezeichnen diese gleiche oder ähnliche Elemente.

### Kurze Beschreibung der Figuren

Fig. 1 zeigt eine Hohlleitereinkopplungsvorrichtung gemäß einer Ausführungsform.
Fig. 2 zeigt ein Hochfrequenzsubstrat in Draufsicht gemäß einer Ausführungsform.
Fig. 3 zeigt eine perspektivische Darstellung des Hochfrequenzsubstrats gemäß einer Ausführungsform.
Fig. 4a, 4b und 4c zeigen eine Hohlleitereinkopplungsvorrichtung gemäß einer Ausführungsform in drei unterschiedlichen Ansichten.
Fig. 5 zeigt ein Füllstandmessgerät und/oder einen Radarsensor gemäß einer Ausführungsform.
Fig. 6 zeigt eine Kurve gemessen in einer Hohlleitereinkopplungsvorrichtung gemäß einer Ausführungsform.
Fig. 7 zeigt ein Flussdiagram zur Illustration von Schritten eines Verfahrens zum Erzeugen eines Radarsignals mit einer Hohlleitereinkopplungsvorrichtung gemäß einer Ausführungsform.

### Detaillierte Beschreibung von Ausführungsformen

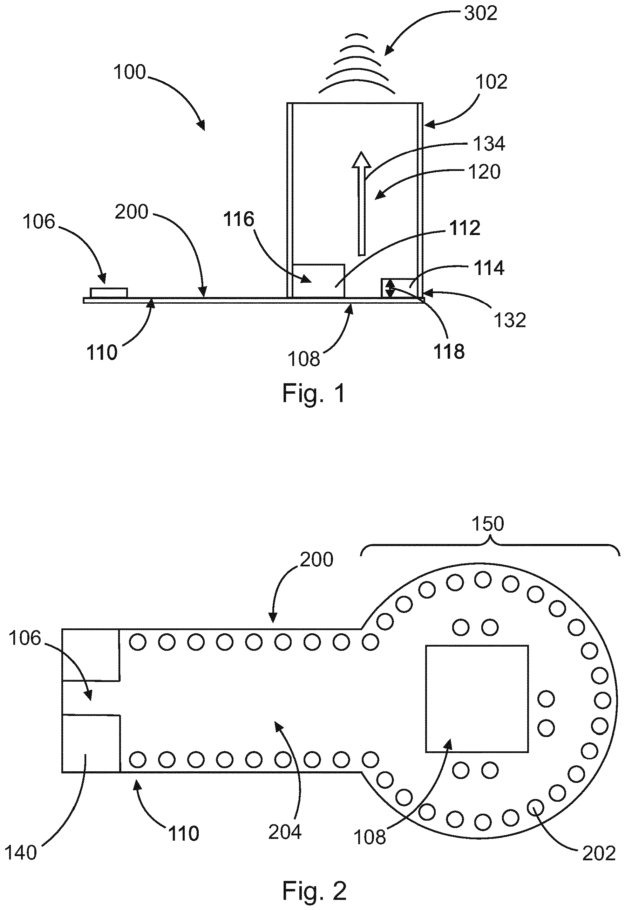

Figur 1 zeigt einer Hohlleitereinkopplungsvorrichtung 100 gemäß einer Ausführungsform.

Die Hohlleitereinkopplungsvorrichtung 100 weist ein Hochfrequenzsubstrat 200 mit einem Eingangsleiter 106 auf, der an einem ersten Ende des Hochfrequenzsubstrats 200 angeordnet ist. Es kann vorgesehen sein, dass der Eingangsleiter gegenüber dem Substrat nicht erhaben ist. Über den Eingangsleiter kann eine oder mehrere Erregerwellen in das Hochfrequenzsubstrat 200 eingespeist werden, etwa von einem Radarmodul. Dieses erste Ende befindet sich in Ausbreitungsrichtung der Erregerwelle, in Laufrichtung der Erregerwelle und/oder Längsrichtung des Hochfrequenzsubstrats 200 gegenüber einem zweiten Ende des Hochfrequenzsubstrats 200, an welchem ein Abstrahlbereich 108 des Hochfrequenzsubstrats 200 angeordnet ist. Der Eingangsleiter 106 und der Abstrahlbereich 108 sind wiederum durch einen substratintegrierten Wellenleiter 110 gekoppelt, durch welchen die Erregerwelle vom Eingangsleiter 106 zum Abstrahlbereich 108 laufen kann.

Die Hohlleitereinkopplungsvorrichtung 100 verfügt ferner über einen Hohlleiter 102, welcher mit einem Erregerende 132 an, auf und/oder über dem Abstrahlbereich 108 des Hochfrequenzsubstrats 200 angeordnet ist. Über den Abstrahlbereich 108 kann die Erregerwelle zumindest teilweise in ein Innenvolumen 120 des Hohlleiters 102 eingekoppelt werden.

Im Bereich des Erregerendes 132 des Hohlleiters 102 ist wenigstens ein erstes Erregerelement 112 und ein zweites Erregerelement 114 angeordnet. Jedes Erregerelement 112, 114 weist eine in Längserstreckungsrichtung 134 des Hohlleiters 102 bemessene Länge 116, 118 auf. Die Längen 116, 118 der Erregerelemente 112, 114 sind dabei jeweils von einer Unterkante des entsprechenden Erregerelements 112, 114 zu dessen Oberkante bemessen. In dem in Figur 1 gezeigten Beispiel sind die Unterkanten der Erregerelemente 112, 114 bündig mit der Stirnfläche des Hohlleiters 102 an dem Erregerende 132. Die Erregerelemente 112, 114 könnten jedoch auch in Längserstreckungsrichtung 134 versetzt zueinander angeordnet sein.

Durch die Erregerwelle können basierend auf den Erregerelementen 112, 114 wenigstens zwei Resonanzwellen unterschiedlicher Resonanzfrequenz erzeugt werden. Beispielsweise kann eine erste Resonanzwelle an einem der Erregerelemente 112, 114 ausgebildet werden und eine zweite Resonanzwelle kann zwischen den beiden Erregerelementen 112, 114, beispielsweise zwischen deren Oberkanten, ausgebildet werden. Alternativ oder zusätzlich kann eine der Resonanzwellen an einem der Erregerelemente 112, 114 und einer weiteren Struktur des Hohlleiters 102 und/oder einem weiteren Erregerelement gebildet werden. Insbesondere die Längen 116, 118 der beiden Erregerelemente 112, 114 können derart aufeinander abgestimmt sein, dass sich die Resonanzwellen überlagern, beispielsweise zumindst teilweise phasenrichtig und/oder mit im Wesentlichen identischer Phasenlage (und/oder einem gewissen Phasenversatz zueinander) bei Fortschreiten der Welle(n) im Hohlleiter 102 aufaddieren, um zumindest einen Teil des Radarsignals zu bilden. Somit kann eine erwünschte Breitbandigkeit des Radarsignals 302 erreicht werden. Die Breitbandigkeit des Signals kann beispielsweise in einem Bereich von 1-50 GHz, insbesondere rund 10 GHz bei einer Frequenz von 80 GHz, betragen. Mit dieser Art der Einkopplung sind Bandbreiten von über 10%, beispielsweise 12-15%, etwa 12-13%, zu erreichen.

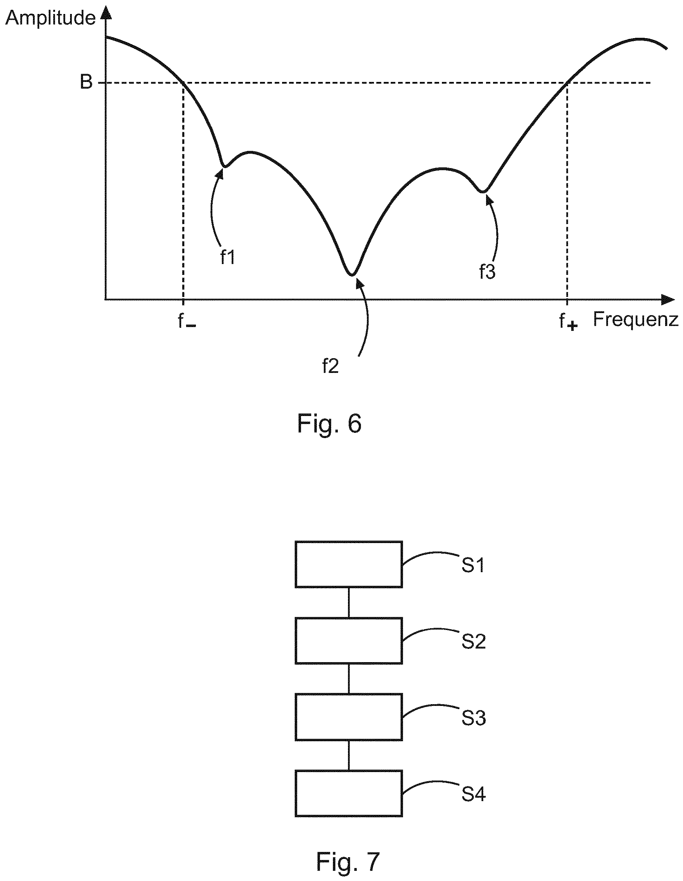

Grundsätzlich kann man zwei unterschiedliche Arten der Überlagerung unterscheiden. Eine phasenrichtige Überlagerung kann zum einen bei Signalen gleicher Frequenz erfolgen. Bei unterschiedlichen Frequenzen laufen die Phasen zwangsläufig etwas auseinander. Signale mit unterschiedlichen Frequenzen können jedoch miteinander überlagert und bilden durch den Frequenzversatz von einer Frequenz zur anderen eine gewisse Breitbandigkeit, beispielsweise wie in Fig.6 zu sehen ist. Durch phasenrichtige Überlagerung von zwei Erregern bzw. Signalen mit gleicher Frequenz können sich diese verstärken. Dadurch wird der Wirkungsgrad der gesamten Vorrichtung erhöht. Dieser Effekt kann beispielswese zwischen den beiden Erregern 112 und 122 ausgenutzt werden. Durch den räumlichen Abstand und die Laufzeit des Signals kann ferner die Phase entsprechend eingestellt, beeinflusst und/oder angepasst werden.

Die zwei Erregerelemente 112, 114 des Ausführungsbeispiels der Figur 1 sind rechteckig und/oder finnenartig ausgebildet. Der Hohlleiter 102 ist ferner exemplarisch als Rundhohlleiter 102 ausgebildet, kann jedoch auch beispielsweise als Rechteckhohlleiter ausgebildet sein. Die Erregerelemente 112, 114 sind in radialer Richtung des Hohlleiters 102 voneinander beabstandet. Die beiden Erregerelemente 112, 114 ragen dabei an sich gegenüberliegenden Seiten von der Wandung und/oder Innenfläche des Hohlleiters 102 ab.

Die Erregerelemente 112, 114 des Hohlleiters 102 können auch als Finne bzw. Doppelfinne angesehen werden. Das erste Erregerelement 112 kann auch als Erreger oder Resonator bezeichnet werden, wobei das zweite Erregerelement 114 entsprechend als Suberreger oder Subresonator bezeichnet werden kann, oder umgekehrt.

Optional zur Abstimmung der Längen 116, 118 kann auch eine Geometrie, Größe, Form, Position, relative Anordnung und/oder relative Ausrichtung der Erregerelemente 112, 114 zur Beeinflussung der Resonanzwellen und/oder Resonanzfrequenzen angepasst und/oder aufeinander abgestimmt werden. Auch kann eines oder mehrere weitere Erregerelemente vorgesehen sein.

Figur 2 zeigt ein Hochfrequenzsubstrat 200 in Draufsicht gemäß einer Ausführungsform. Das Hochfrequenzsubstrat 200 weist einen Eingangsleiter 106 zur Einspeisung einer einkommenden Erregerwelle auf. Das Hochfrequenzsubstrat 200 weist einen rechteckigen Querschnitt auf und verfügt über einen substratintegrierten Wellenleiter 110. Der Substratintegrierte Wellenleiter 110 ist zwischen einem oberen Kupferlayer 204a und einem unteren Kupferlayer (nicht gezeigt) ausgebildet. Zwischen den Kupferlayern 204a, 204b kann Dielektrikum ausgebildet sein. Der substratintegrierte Wellenleiter 110 gleicht somit einem gefüllten Hohlleiter. Die beiden Layer sind mit Durchkontaktierungen 202 verbunden.

Der obere Kupferlayer 204a weist im Bereich des Abstrahlbereichs 108 einen Durchbruch auf, so dass die Erregerwelle in den Hohlleiter 102 auftauchen kann. Auch der Abstrahlbereich 108 ist mit Durchkontaktierungen 202 abgegrenzt bzw. umrandet.

Der Hohlleiter 102 kann auf dem runden Abschnitt 150 des Hochfrequenzsubstrats 200 des Ausführungsbeispiels der Figur 2 positioniert werden, wobei die Stirnfläche des Hohlleiters 102 dem oberen Kupferlayer 204a zugewandt ist und/oder darauf angeordnet ist, so dass der Abstrahlbereich 108 entlang dessen Außenumfang von dem Hohlleiter 102 umlaufen und/oder umschlossen wird.

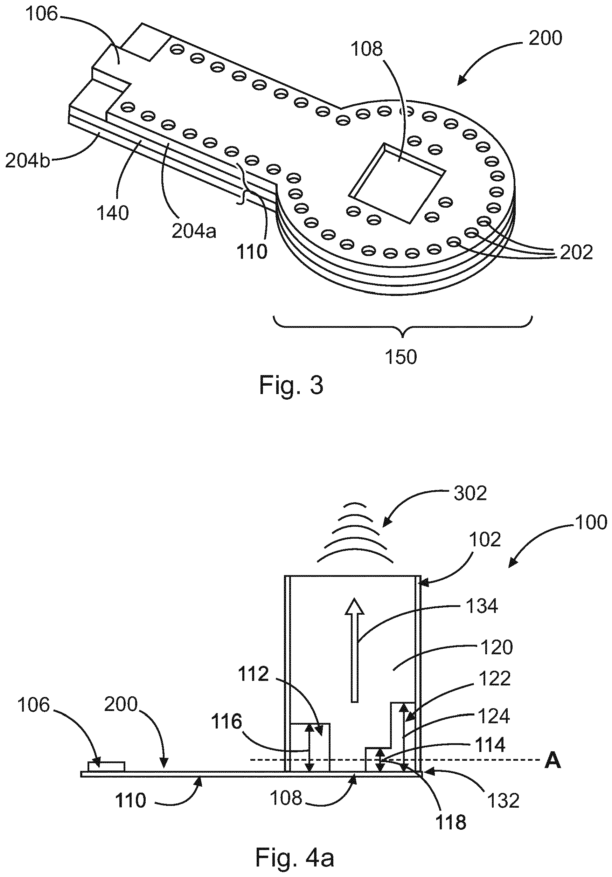

Der substratintegrierte Wellenleiter 110 weist Durchkontaktierungen 202 auf, welche eine Wandung bilden. Die Durchkontaktierungen 202 können alternativ oder zusätzlich den Abstrahlbereich 108 abgrenzen. Die Durchkontaktierungen 202 verbinden den oberen Kupferlayer 204a und den unteren Kupferlayer 204b (in Fig. 2 nicht gezeigt, siehe Fig. 3) elektrisch leitend miteinander.

Figur 3 zeigt eine perspektivische Darstellung des Hochfrequenzsubstrats 200 gemäß einer Ausführungsform. Sofern nicht anders beschrieben weist das Hochfrequenzsubstrat 200 der Figur 3 dieselben Elemente und/oder Komponenten wie das Hochfrequenzsubstrat 200 der Figur 2 auf. In Figur 3 sind die drei Schichten des Hochfrequenzsubstrats 200 gut zu sehen. Der obere Kupferlayer 204a liegt auf einer Substratschicht 140, welche wiederum auf dem unteren Kupferlayer 204b angeordnet ist. Die zwei Kupferlayer 204a, 204b oder Kupferschichten sind anhand den Durchkontaktierungen 202 miteinander verbunden. Der Durchbruch im oberen Kupferlayer 204a im Abstrahlbereich 108 ist im Beispiel der Ausführungsform der Figur 3 gut erkennbar.

Figur 4a zeigt eine Hohlleitereinkopplungsvorrichtung 100 gemäß einer weiteren Ausführungsform. Sofern nicht anders beschrieben weist die Hohlleitereinkopplungsvorrichtung 100 der Figur 4a dieselben Elemente und/oder Komponenten wie die Hohlleitereinkopplungsvorrichtung 100 der voranstehenden Figuren auf. Der Hohlleiter 102 der Ausführungsform der Figur 4a ist ein runder Hohlleiter 102. Der Hohlleiter 102 des Ausführungsbeispiels der Figur 4a weist ferner ein drittes Erregerelement 122 auf. Dieses dritte Erregerelement 122 ist als Wandungsvorsprung ausgebildet und ragt von der Wandung bzw. Innenfläche des Hohlleiters 102 in das Innenvolumen 120 ab. Das dritte Erregerelement 122 kann auch als Teil der Wandung des Hohlleiters 102 angesehen werden. Das zweite Erregerelement 114 ragt dabei von dem dritten Erregerelement 122 in das Innenvolumen 120 ab. Die in Längerstreckungsrichtung 134 bemessene Länge 124 des dritten Erregerelement 122 ist größer als die des erstes Erregerelements 116, die wiederum größer ist als die des zweiten Erregerelements 118. Die Höhe 124 des dritten Erregerelements 122 ist derart abgestimmt, dass eine dritte Resonanzwelle etwas zeitverzögert zur ersten und zweiten Resonanzwelle angeregt wird. Insbesondere kann die dritte Resonanzwelle zwischen dem ersten Erregerelement 112 und dem dritten Erregerelement 122 (bzw. zwischen deren Oberkanten) angeregt werden, welche eine von der ersten und zweiten Resonanzfrequenz unterschiedliche dritte Resonanzfrequenz aufweist. Durch Überlagerung der drei Resonanzwellen wird das Radarsignal 302 gebildet, welches sich dann Richtung Ausgang des Hohlleiters 102 ausbreitet und über ein dem Erregerende 132 gegenüberliegendes Ende abgestrahlt werden kann.

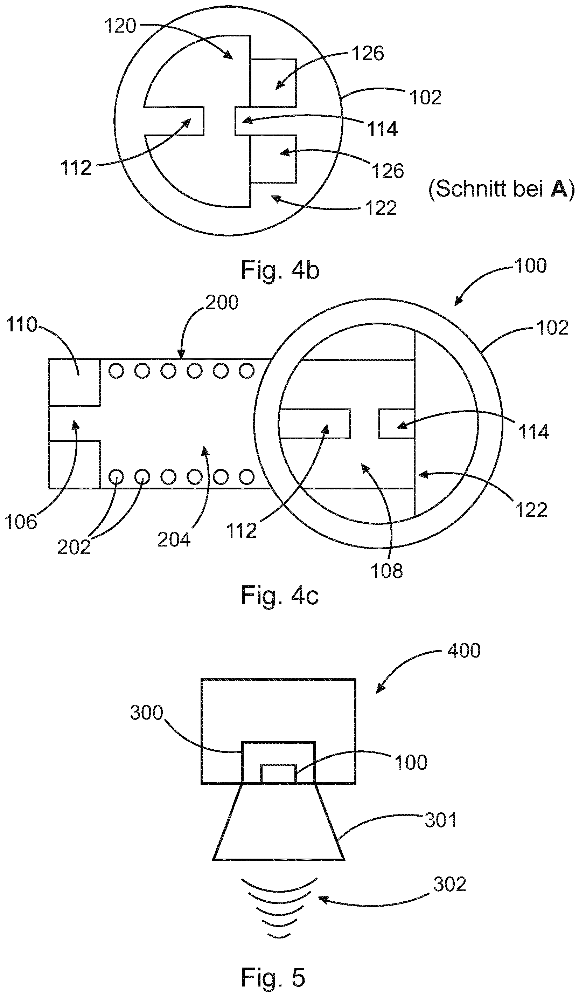

Figur 4b zeigt einen Schnitt der erfindungsgemäßen Hohlleitereinkopplungsvorrichtung 100 der Ausführungsform der Figur 4a entlang der Linie Ader Fig4a. Die Perspektive des Schnittbildes der Figur 4b ist dabei entlang der Abstrahlrichtung des Radarsignals und/oder Längserstreckungsrichtung 134 des Hohlleiters 102. Der Hohlleiter 102 der Figur 4b weist ferner zwei Hohlräume 126 auf, die sich von beiden Seiten vom zweiten Erregerelement 114 befinden. Die Hohlräume 126 können der besseren Fertigbarkeit des Hohlleiters 102 dienen. Der Hohlleiter 102 der Figur 4a und 4b ist, wie es der Figur 4b zu entnehmen ist, einstückig mit den drei Erregerelementen 114, 116, 122 ausgebildet.

Figur 4c zeigt eine Draufsicht der Hohlleitereinkopplungsvorrichtung 100 gemäß einer Ausführungsform. In Figur 4c ist ersichtlich, wie der Abstrahlbereich 108 ringförmig von dem Hohlleiter 102 umschlossen ist, so dass die Erregerwelle in das Innenvolumen des Hohlleiters 102 eintauchen kann.

Figur 5 zeigt ein Füllstandmessgerät 400 und/oder einen Radarsensor 400 gemäß einer Ausführungsform. Das Füllstandmessgerät 400 des Ausführungsbeispiels der Figur 5 weist ein Radarmodul 300 und eine Hohlleitereinkopplungsvorrichtung 100 auf. Über das Radarmodul 300 kann eine Erregerwelle in die Hohlleitereinkopplungsvorrichtung 100 eingespeist werden und beispielsweise über eine Antenne 301 abgestrahlt werden.

Figur 6 zeigt eine Kurve gemessen in einer Hohlleitereinkopplungsvorrichtung 100 gemäß einer Ausführungsform. Insbesondere ist die in Figur 6 gezeigte Kurve eine Returnloss-Kurve, welche in Abhängigkeit der Frequenz dargestellt ist. Die Kurve wird in der Figur 6 mit Hilfe eines Diagramms gezeigt. Die vertikale Achse des Diagramms zeigt die Amplitude der Returnloss-Kurve in einer beliebigen Einheit. Die Amplitude kann beispielsweise in dB angegeben werden. Die horizontale Achse zeigt eine Frequenz in einer beliebigen Einheit. Die Frequenz kann beispielsweise in GHz oder MHz angegeben werden. Die gemessene Kurve der Figur 6 kann durch Überlagerung und/oder Addierung dreier Resonanzwellen entstanden sein. Im Diagramm der Figur 6 sind drei Resonanzfrequenzen f1, f2, f3 erkennbar. Die erste Resonanzwelle welche an einem der Erregerelemente 112, 114 ausgebildet werden kann (siehe Figur 1 oder 4a), kann die Resonanzfrequenz f1 aufweisen. Die zweite Resonanzwelle, welche zwischen den beiden Erregerelementen 112, 114, beispielsweise zwischen deren Oberkanten, ausgebildet werden kann, kann die Resonanzfrequenz f2 aufweisen. Die dritte Resonanzwelle, welche zwischen dem ersten Erregerelement 112 und dem dritten Erregerelement 122 (bzw. zwischen deren Oberkanten) angeregt werden kann (siehe Figur 4a), kann die Resonanzfrequenz f3 aufweisen. Die drei Resonanzfrequenzen f1, f2, f3 unterscheiden sich voneinander.

Erkennbar ist zudem im Diagramm der Figur 6 eine mögliche durch die Ausgestaltung der Hohlleitereinkopplungsvorrichtung, insbesondere der Erregerelemente 112, 114, 122 erreichte Bandbreite der gemessenen Kurve. Die durch die Ausgestaltung der Hohlleitereinkopplungsvorrichtung, insbesondere der Erregerelemente 112, 114, 122 erreichte Bandbreite des Radarsignals 302 (siehe Figur 1, 4a und 5) kann direkt oder indirekt in Verhältnis mit der Bandbreite der gemessenen Kurve stehen. Diese kann beispielsweise einen Frequenzbereich der gemessenen Kurve bezeichnen in welchem die gemessene Kurve sich ohne Unterbrechung unterhalb einem vorgegebenen Amplitudenwert B befindet. Der Wert B kann beispielsweise -10dB betragen. Andere Werte für B sind jedoch denkbar. Im Beispiel der Figur 6 befindet sich dieser Frequenzbereich zwischen den Frequenzen f- und f+.

Figur 7 zeigt ein Flussdiagramm zur Illustration eines Verfahrens gemäß einer Ausführungsform.

In Schritt S1 wird wenigstens eine Erregerwelle in ein Hochfrequenzsubstrat 200 einer Hohlleitereinkopplungsvorrichtung 100 eingespeist.

In Schritt S2 wird die Erregerwelle über einen Abstrahlbereich 108 des Hochfrequenzsubstrats 200 der Hohlleitereinkopplungsvorrichtung 100 in ein Erregerende 132 eines Hohlleiters 102 der Hohlleitereinkopplungsvorrichtung 100 eingekoppelt und in Schritt S3 wird über die Erregerwelle an wenigstens einem ersten Erregerelement und einem zweiten Erregerelement 112, 114 des Hohlleiters 102 wenigstens eine erste Resonanzwelle mit einer ersten Resonanzfrequenz und eine zweiten Resonanzwelle mit einer zweiten Resonanzfrequenz angeregt.

In Schritt S4 wird das Radarsignal 302 mit dem Hohlleiter 102 der Hohlleitereinkopplungsvorrichtung 100 basierend auf einer Überlagerung wenigstens der ersten Resonanzwelle und der zweiten Resonanzwelle abgestrahlt.

## Patentansprüche

1. Hohlleitereinkopplungsvorrichtung (100) für einen Radarsensor (300), aufweisend:
einen Hohlleiter (102) zum Abstrahlen und/oder Empfangen eines Radarsignals (302); und
ein Hochfrequenzsubstrat (200), welches an einem ersten Ende wenigstens einen Eingangsleiter (106) zur Einspeisung wenigstens einer Erregerwelle in das Hochfrequenzsubstrat (200), an einem dem ersten Ende gegenüberliegenden zweiten Ende einen Abstrahlbereich (108) mit einem Durchbruch zur Auskopplung der Erregerwelle aus dem Hochfrequenzsubstrat (200), und einen mit dem Eingangsleiter (106) und dem Abstrahlbereich (108) gekoppelten substratintegrierten Wellenleiter (110) aufweist;
wobei ein Erregerende (132) des Hohlleiters (102) derart auf dem Abstrahlbereich (108) des Hochfrequenzsubstrats (200) angeordnet ist, dass die Erregerwelle über den Abstrahlbereich (108) des Hochfrequenzsubstrats (200) in das Erregerende (132) des Hohlleiters (102) einkoppelbar ist;
wobei der Hohlleiter (102) wenigstens ein erstes Erregerelement (112) und ein zweites Erregerelement (114) aufweist, welche jeweils an dem Erregerende (132) in einem Innenvolumen (120) des Hohlleiters (102) angeordnet sind und sich parallel zur Längserstreckungsrichtung (134) des Hohlleiters (102) erstrecken;
**gekennzeichnet dadurch, dass** das erste Erregerelement (112) eine erste in Längserstreckungsrichtung (134) des Hohlleiters (102) bemessene Länge (116) und das zweite Erregerelement (114) eine zweite in Längserstreckungsrichtung (134) des Hohlleiters (102) bemessene Länge (118) aufweist, welche sich von der ersten Länge des ersten Erregerelements (116) unterscheidet, so dass über die Erregerwelle an dem ersten Erregerelement (112) und dem zweiten Erregerelement (114) wenigstens eine erste Resonanzwelle mit einer ersten Resonanzfrequenz und eine zweite Resonanzwelle mit einer zweiten Resonanzfrequenz anregbar sind, welche in dem Hohlleiter (102) unter Bildung des Radarsignals (302) überlagerbar sind, und
wobei der Abstrahlbereich (108) mit Durchkontaktierungen begrenzt ist und/oder der Hohlleiter (102) zwei Hohlräume (126) aufweist, die sich von beiden Seiten vom zweiten Erregerelement (114) befinden.

2. Hohlleitereinkopplungsvorrichtung (100) für einen Radarsensor (300) nach Anspruch 1,
wobei das erste Erregerelement (112) und das zweite Erregerelement (114) jeweils zumindest teilweise von einer Wandung des Hohlleiters (102) in das Innenvolumen (120) des Hohlleiters (102) abragen.

3. Hohlleitereinkopplungsvorrichtung (100) für einen Radarsensor (300) nach einem der vorhergehenden Ansprüche,
wobei das erste Erregerelement (112) und das zweite Erregerelement (114) an zwei sich gegenüberliegenden Seiten des Hohlleiters (102) von der Wandung des Hohlleiters (102) abragen.

4. Hohlleitereinkopplungsvorrichtung (100) für einen Radarsensor (300) nach einem der vorhergehenden Ansprüche,
wobei zumindest die erste Länge (116) des ersten Erregerelements (112) und die zweite Länge (118) des zweiten Erregerelements (114) derart aufeinander abgestimmt sind, dass die zweite Resonanzwelle derart zeitverzögert zur ersten Resonanzwelle generierbar ist, dass die erste Resonanzwelle und die zweite Resonanzwelle überlagerbar sind, insbesondere zumindest teilweise phasenrichtig überlagerbar sind.

5. Hohlleitereinkopplungsvorrichtung (100) für einen Radarsensor (300) nach einem der vorhergehenden Ansprüche,
wobei das zweite Erregerelement dazu eingerichtet ist, die erste Resonanzwelle an zu erzeugen und die zweite Resonanzwelle zwischen dem ersten (112) und dem zweiten Erregerelement (114) zu erzeugen.

6. Hohlleitereinkopplungsvorrichtung (100) für einen Radarsensor (300) nach einem der vorhergehenden Ansprüche, ferner aufweisend:
ein drittes Erregerelement (122), welches an dem Erregerende (132) in dem Innenvolumen (120) des Hohlleiters (102) angeordnet ist;
wobei das dritte Erregerelement (122) eine dritte in Längserstreckungsrichtung (134) des Hohlleiters (102) bemessene Länge (124) aufweist, welche sich von der ersten Länge (116) des ersten Erregerelements (112) und der zweiten Länge (118) des zweiten Erregerelements (114) unterscheidet,
wobei die dritte Länge (124) derart bemessen ist und das dritte Erregerelement dazu ausgelegt ist, dass über die Erregerwelle zwischen dem ersten Erregerelement (112) und dem dritten Erregerelement (122) eine dritte Resonanzwelle mit einer dritten Resonanzfrequenz anregbar ist.

7. Hohlleitereinkopplungsvorrichtung (100) für einen Radarsensor (300) nach Anspruch 6,
wobei die erste Resonanzwelle, die zweite Resonanzwelle und die dritte Resonanzwelle zu dem Radarsignal (302) überlagerbar sind.

8. Hohlleitereinkopplungsvorrichtung (100) für einen Radarsensor (300) nach Anspruch 7,
wobei das zweite Erregerelement (114) von dem durch das dritte Erregerelement (122) ausgebildeten Wandungsvorsprung in das Innenvolumen (120) des Hohlleiters (102) abragt.

9. Hohlleitereinkopplungsvorrichtung (100) für einen Radarsensor (300) nach einem der Ansprüche 6 bis 8,
wobei die erste Länge (116) größer als die zweite Länge (118) ist und die dritte Länge (124) größer als die erste Länge (116) ist.

10. Hohlleitereinkopplungsvorrichtung (100) für einen Radarsensor (300) nach einem der vorhergehenden Ansprüche,
wobei das Hochfrequenzsubstrat (200) zumindest in einem Teilbereich einen rechteckigen Querschnitt aufweist.

11. Hohlleitereinkopplungsvorrichtung (100) für einen Radarsensor (300) nach einem der vorhergehenden Ansprüche,
wobei der Hohlleiter (102) der Hohlleitereinkopplungsvorrichtung (100) ein Rundhohlleiter (102) ist.

12. Radarsensor (300) und/oder Füllstandmessgerät (400) mit einer Hohlleitereinkopplungsvorrichtung (100) nach einem der vorhergehenden Ansprüche.

13. Verwendung einer Hohlleitereinkopplungsvorrichtung (100) nach einem der Ansprüche 1 bis 11 in einem Radarsensor (300) und/oder einem Füllstandmessgerät (400).

14. Verfahren zum Erzeugen und/oder Empfangen eines Radarsignals (302) mit einer Hohlleitereinkopplungsvorrichtung (100) nach einem der Ansprüche 1 bis 11, aufweisend die Schritte:
Einspeisen (S1) wenigstens einer Erregerwelle in ein Hochfrequenzsubstrat (200) einer Hohlleitereinkopplungsvorrichtung (100);
Einkoppeln (S2) der Erregerwelle über einen Abstrahlbereich 108 des Hochfrequenzsubstrats (200) der Hohlleitereinkopplungsvorrichtung (100) in ein Erregerende (132) eines Hohlleiters (102) der Hohlleitereinkopplungsvorrichtung (100);
Anregen (S3), über die Erregerwelle an wenigstens einem ersten Erregerelement und einem zweiten Erregerelement (112, 114) des Hohlleiters (102), wenigstens einer ersten Resonanzwelle mit einer ersten Resonanzfrequenz und einer zweiten Resonanzwelle mit einer zweiten Resonanzfrequenz; und
Abstrahlen (S4) des Radarsignals (302) mit dem Hohlleiter (102) der Hohlleitereinkopplungsvorrichtung (100) basierend auf einer Überlagerung wenigstens der ersten Resonanzwelle und der zweiten Resonanzwelle; und/oder Empfangen eines reflektierten Radarsignals mit dem Hohlleiter (102) der Hohlleitereinkopplungsvorrichtung (100).

## Claims

1. Waveguide coupling device (100) for a radar sensor (300), comprising:
a waveguide (102) for emitting and/or receiving a radar signal (302); and
a high-frequency substrate (200) having at a first end at least one input conductor (106) for feeding at least one excitation wave into the high-frequency substrate (200), at a second end opposite the first end a radiation region (108) for coupling the excitation wave out of the high-frequency substrate (200), and a waveguide (110) coupled to the input conductor (106) and the radiation region (108);
wherein an excitation end (132) of the waveguide (102) is arranged on the radiation region (108) of the high-frequency substrate (200) such that the excitation wave can be coupled into the excitation end (132) of the waveguide (102) via the radiation region (108) of the high-frequency substrate (200);
wherein the waveguide (102) comprises at least a first excitation element (112) and a second excitation element (114), each of which is disposed at the excitation end (132) in an interior volume (120) of the waveguide (102) and extends in parallel to the longitudinal direction (134) of the waveguide (102);
**characterized in that** the first excitation element (112) has a first length (116) measured in the longitudinal direction (134) of the waveguide (102) and the second excitation element (114) has a second length (118) dimensioned in the longitudinal direction (134) of the waveguide (102), which is different from the first length of the first excitation element (116), so that at least a first resonant wave with a first resonant frequency and a second resonant wave with a second resonant frequency is excitable via the excitation wave at the first excitation element (112) and the second excitation element (114), which are superimposable in the waveguide (102) to form the radar signal (302),
wherein the radiation area (108) is limited by vias and/or the waveguide (102) has two cavities (126) located from either side of the second excitation element (114).

2. Waveguide coupling device (100) for a radar sensor (300) according to claim 1,
wherein the first excitation element (112) and the second excitation element (114) each project at least partially from a wall of the waveguide (102) into the interior volume (120) of the waveguide (102).

3. Waveguide coupling device (100) for a radar sensor (300) according to any one of the preceding claims,
wherein the first excitation element (112) and the second excitation element (114) project from the wall of the waveguide (102) on two opposing sides of the waveguide (102).

4. Waveguide coupling device (100) for a radar sensor (300) according to any one of the preceding claims,
wherein at least the first length (116) of the first excitation element (112) and the second length (118) of the second excitation element (114) are matched to one another in such a way that the second resonant wave is generatable with a time delay with respect to the first resonant wave in such a way that the first resonant wave and the second resonant wave are superimposable, in particular are superimposable at least partially in phase.

5. Waveguide coupling device (100) for a radar sensor (300) according to any one of the preceding claims,
wherein the first resonant wave originates at the second excitation element (114) and the second resonant wave originates between the first (112) and second excitation elements (114).

6. A waveguide coupling device (100) for a radar sensor (300) according to any one of the preceding claims, further comprising:
a third excitation element (122) disposed at the excitation end (132) in the interior volume (120) of the waveguide (102);
wherein the third excitation element (122) has a third length (124) measured in the longitudinal direction (134) of the waveguide (102), which is different from the first length (116) of the first excitation element (112) and the second length (118) of the second excitation element (114),
wherein the third length (124) is dimensioned such that a third resonant wave with a third resonant frequency can be excited via the excitation wave between the first excitation element (112) and the third excitation element (122).

7. Waveguide coupling device (100) for a radar sensor (300) according to claim 6,
wherein the first resonant wave, the second resonant wave, and the third resonant wave are superimposable to the radar signal (302).

8. Waveguide coupling device (100) for a radar sensor (300) according to claim 7,
wherein the second excitation element (114) projects into the interior volume (120) of the waveguide (102) from the wall projection formed by the third excitation element (122).

9. Waveguide coupling device (100) for a radar sensor (300) according to any one of claims 6 to 8,
wherein the first length (116) is greater than the second length (118) and the third length (124) is greater than the first length (116).

10. Waveguide coupling device (100) for a radar sensor (300) according to any one of the preceding claims,
wherein the high-frequency substrate (200) has a rectangular cross-section at least in a partial area.

11. Waveguide coupling device (100) for a radar sensor (300) according to any one of the preceding claims,
wherein the waveguide (102) of the waveguide coupling device (100) is a circular waveguide (102).

12. Radar sensor (300) and/or level meter (400) comprising a waveguide coupling device (100) according to any one of the preceding claims.

13. Use of a waveguide coupling device (100) according to any one of claims 1 to 11 in a radar sensor (300) and/or a level meter (400).

14. A method of generating and/or receiving a radar signal (302) with a waveguide coupling device (100) according to any one of claims 1 to 11, comprising the steps of:
injecting (S1) at least one excitation wave into a high frequency substrate (200) of a waveguide coupling device (100);
coupling (S2) the excitation wave into an excitation end (132) of a waveguide (102) of the waveguide coupling device (100) via a radiation region 108 of the high-frequency substrate (200) of the waveguide coupling device (100);
exciting (S3), via the excitation wave on at least a first excitation element and a second excitation element (112, 114) of the waveguide (102), at least a first resonant wave having a first resonant frequency and a second resonant wave having a second resonant frequency; and
radiating (S4) the radar signal (302) with the waveguide (102) of the waveguide coupling device (100) based on a superposition of at least the first resonant wave and the second resonant wave; and/or receiving a reflected radar signal with the waveguide (102) of the waveguide coupling device (100).

## Revendications

1. Dispositif de couplage de guide d'ondes (100) pour un capteur radar (300), comportant :
un guide d'ondes (102) pour émettre et/ou recevoir un signal radar (302) ; et
un substrat à haute fréquence (200) qui comporte, à une première extrémité, au moins un conducteur d'entrée (106) pour injecter au moins une onde d'excitation dans le substrat à haute fréquence (200), à une seconde extrémité opposée à la première extrémité, une zone d'émission (108) avec un passage pour découpler l'onde d'excitation du substrat à haute fréquence (200), et un guide d'ondes (110) intégré au substrat, couplé au conducteur d'entrée (106) et à la zone d'émission (108) ;
dans lequel une extrémité d'excitation (132) du guide d'ondes (102) est agencée sur la zone d'émission (108) du substrat à haute fréquence (200) de telle sorte que l'onde d'excitation peut être couplée dans l'extrémité d'excitation (132) du guide d'ondes (102) par l'intermédiaire de la zone d'émission (108) du substrat à haute fréquence (200) ;
dans lequel le guide d'ondes (102) comporte au moins un premier élément d'excitation (112) et un deuxième élément d'excitation (114) qui sont respectivement agencés au niveau de l'extrémité d'excitation (132) dans un volume intérieur (120) du guide d'ondes (102) et qui s'étendent parallèlement à la direction d'extension longitudinale (134) du guide d'ondes (102) ;
**caractérisé en ce que**
le premier élément d'excitation (112) a une première longueur (116) mesurée dans la direction d'extension longitudinale (134) du guide d'ondes (102) et le deuxième élément d'excitation (114) a une deuxième longueur (118) mesurée dans la direction d'extension longitudinale (134) du guide d'ondes (102) qui est différente de la première longueur du premier élément d'excitation (116), de sorte qu'au moins une première onde de résonance ayant une première fréquence de résonance et une deuxième onde de résonance ayant une deuxième fréquence de résonance peuvent être excitées par l'intermédiaire de l'onde d'excitation au niveau du premier élément d'excitation (112) et du deuxième élément d'excitation (114), lesquelles ondes peuvent être superposées dans le guide d'ondes (102) en formant le signal radar (302), et
dans lequel la zone d'émission (108) est limitée par des trous d'interconnexion et/ou le guide d'ondes (102) comporte deux cavités (126) qui sont situées des deux côtés du deuxième élément d'excitation (114).

2. Dispositif de couplage de guide d'ondes (100) pour un capteur radar (300) selon la revendication 1,
dans lequel le premier élément d'excitation (112) et le deuxième élément d'excitation (114) font respectivement saillie au moins partiellement à partir d'une paroi du guide d'ondes (102) dans le volume intérieur (120) du guide d'ondes (102).

3. Dispositif de couplage de guide d'ondes (100) pour un capteur radar (300) selon l'une des revendications précédentes,
dans lequel le premier élément d'excitation (112) et le deuxième élément d'excitation (114) font saillie à partir de la paroi du guide d'ondes (102) sur deux côtés mutuellement opposés du guide d'ondes (102).

4. Dispositif de couplage de guide d'ondes (100) pour un capteur radar (300) selon l'une des revendications précédentes,
dans lequel au moins la première longueur (116) du premier élément d'excitation (112) et la deuxième longueur (118) du deuxième élément d'excitation (114) sont adaptées l'une à l'autre de telle sorte que la deuxième onde de résonance peut être générée de manière retardée par rapport à la première onde de résonance, que la première onde de résonance et la deuxième onde de résonance peuvent être superposées et peuvent en particulier être superposées de manière au moins partiellement en phase.

5. Dispositif de couplage de guide d'ondes (100) pour un capteur radar (300) selon l'une des revendications précédentes,
dans lequel le deuxième élément d'excitation est conçu pour générer la première onde de résonance et pour générer la deuxième onde de résonance entre les premier (112) et second (114) éléments d'excitation.

6. Dispositif de couplage de guide d'ondes (100) pour un capteur radar (300) selon l'une des revendications précédentes, comportant en outre :
un troisième élément d'excitation (122) qui est agencé au niveau de l'extrémité d'excitation (132) dans le volume intérieur (120) du guide d'ondes (102) ;
dans lequel le troisième élément d'excitation (122) a une troisième longueur (124) mesurée dans la direction d'extension longitudinale (134) du guide d'ondes (102), qui est différente de la première longueur (116) du premier élément d'excitation (112) et de la deuxième longueur (118) du deuxième élément d'excitation (114),
dans lequel la troisième longueur (124) est dimensionnée et le troisième élément d'excitation est conçu de telle sorte qu'une troisième onde de résonance ayant une troisième fréquence de résonance peut être excitée par l'intermédiaire de l'onde d'excitation entre le premier élément d'excitation (112) et le troisième élément d'excitation (122).

7. Dispositif de couplage de guide d'ondes (100) pour un capteur radar (300) selon la revendication 6,
dans lequel la première onde de résonance, la deuxième onde de résonance et la troisième onde de résonance peuvent être superposées au signal radar (302).

8. Dispositif de couplage de guide d'ondes (100) pour un capteur radar (300) selon la revendication 7,
dans lequel le deuxième élément d'excitation (114) fait saillie dans le volume intérieur (120) du guide d'ondes (102), à partir de la saillie de paroi formée par le troisième élément d'excitation (122).

9. Dispositif de couplage de guide d'ondes (100) pour un capteur radar (300) selon l'une des revendications 6 à 8,
dans lequel la première longueur (116) est plus grande que la deuxième longueur (118) et la troisième longueur (124) est plus grande que la première longueur (116).

10. Dispositif de couplage de guide d'ondes (100) pour un capteur radar (300) selon l'une des revendications précédentes,
dans lequel le substrat à haute fréquence (200) a une section transversale rectangulaire au moins dans une zone partielle.

11. Dispositif de couplage de guide d'ondes (100) pour un capteur radar (300) selon l'une des revendications précédentes,
dans lequel le guide d'ondes (102) du dispositif de couplage de guide d'ondes (100) est un guide d'ondes circulaire (102) .

12. Capteur radar (300) et/ou appareil de mesure de niveau de remplissage (400) comportant un dispositif de couplage de guide d'ondes (100) selon l'une des revendications précédentes.

13. Utilisation d'un dispositif de couplage de guide d'ondes (100) selon l'une des revendications 1 à 11 dans un capteur radar (300) et/ou un appareil de mesure de niveau de remplissage (400) .

14. Procédé pour générer et/ou recevoir un signal radar (302) avec un dispositif de couplage de guide d'ondes (100) selon l'une des revendications 1 à 11, comportant les étapes consistant à :
injecter (S1) au moins une onde d'excitation dans un substrat à haute fréquence (200) d'un dispositif de couplage de guide d'ondes (100) ;
coupler (S2) l'onde d'excitation dans une extrémité d'excitation (132) d'un guide d'ondes (102) du dispositif de couplage de guide d'ondes (100), par l'intermédiaire d'une zone d'émission (108) du substrat à haute fréquence (200) du dispositif de couplage de guide d'ondes (100) ;
exciter (S3), par l'intermédiaire de l'onde d'excitation au niveau d'au moins un premier élément d'excitation et un deuxième élément d'excitation (112, 114) du guide d'ondes (102), au moins une première onde de résonance ayant une première fréquence de résonance et une deuxième onde de résonance ayant une deuxième fréquence de résonance ; et
émettre (S4) le signal radar (302) avec le guide d'ondes (102) du dispositif de couplage de guide d'ondes (100) sur la base d'une superposition d'au moins la première onde de résonance et la deuxième onde de résonance ; et/ou recevoir un signal radar réfléchi avec le guide d'ondes (102) du dispositif de couplage de guide d'ondes (100).
